**Europäisches Patentamt**

**European Patent Office**

**Office européen des brevets**

(19)

(11) Veröffentlichungsnummer : **0 413 009 B1**

(12) # EUROPÄISCHE PATENTSCHRIFT

(45) Veröffentlichungstag der Patentschrift :
**30.09.92 Patentblatt 92/40**

(51) Int. Cl.⁵ : **A63H 33/12**

(21) Anmeldenummer : **90902756.7**

(22) Anmeldetag : **19.02.90**

(86) Internationale Anmeldenummer :
**PCT/CH90/00038**

(87) Internationale Veröffentlichungsnummer :
**WO 90/09828 07.09.90 Gazette 90/21**

---

(54) **BAUELEMENT FÜR EINEN BAUSATZ, INSBESONDERE EINEN SPIELZEUG-BAUSATZ.**

(30) Priorität : **24.02.89 CH 679/89**

(43) Veröffentlichungstag der Anmeldung :
**20.02.91 Patentblatt 91/08**

(45) Bekanntmachung des Hinweises auf die
Patenterteilung :
**30.09.92 Patentblatt 92/40**

(84) Benannte Vertragsstaaten :
**AT BE CH DE DK ES FR GB IT LI LU NL SE**

(56) Entgegenhaltungen :
**CH-A- 655 247**
**CH-A- 658 887**
**FR-A- 541 757**
**US-A- 1 860 627**
**US-A- 2 226 819**

(73) Patentinhaber : **Interlego AG**
**Neuhofstrasse 21**
**CH-6340 Baar (CH)**

(84) **GB**
Patentinhaber : **LEGO A/S**
**Aastvej 1**
**DK-7190 Billund (DK)**

(84) **BE CH DE DK ES FR IT LI LU NL SE AT**

(72) Erfinder : **BOLLI, Peter**
**Grabenackerstrasse 46**
**CH-6312 Steinhausen (CH)**
Erfinder : **LOOSER, Heinz**
**Mühlebachstrasse 21**
**CH-6340 Baar (CH)**

(74) Vertreter : **Münch, Otto et al**
**Patentanwalts-Bureau Isler AG Postfach 6940**
**CH-8023 Zürich (CH)**

EP 0 413 009 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein Bauelement für einen Bausatz, insbesondere für einen Spielzeugbausatz.

Bauelemente der genannten Art sind in der Form von miteinander verbindbaren Steinen, Balken Flachstäben usw. handelsüblich und deshalb bekannt. Bei diesen Bauelementet dient die Bohrung bzw. jede Bohrung dazu, zwei Bauelemente mittels eines in die Bohrung gesteckten, einrastenden Verbindungsteils miteinander zu kuppeln. Ein derartiges hülsen- und steckerförmiges Verbindungsteil ist beispielsweise aus der CH-PS 658 887 bekannt.

Ferner ist aus CH-PS 655 247 eine Verbindungsvorrichtung mit einem Paar von Verbindungsteilen zur lösbaren, drehfesten Verbindung einer Mehrzahl länglicher Bauelemente in unterschiedlichen Winkellagen, insbesondere von Wellen und Stäben in einem Spielzeugbausatz, bekannt. Die Verbindungsteile enthalten eine Buchse mit zylindrischer Oberfläche, wobei eine Stirnseite der Buchse einen gezahnten Rand aufweist. Benachbarte Buchsen dieser Art können demnach mit ihren gezahnten Rändern in gegenseitigen, drehfesten Eingriff gebracht werden, wobei die Winkellage der Buchsen nach Massgabe der Zahnteilung der gezahnten Ränder wählbar ist.

Schliesslich sind auch Flachstäbe eines Spielzeugsatzes handelsüblich, die je eine Endbohrung aufweisen, welche mit einem die Bohrung an ihrer Stirnendfläche umschliessenden gezahnten Rand versehen ist, um eine drehfeste Verbindung in wählbarer Winkellage mit einem weiteren Bauelement, das ebenfalls einen gezahnten Rand hat, beispielsweise mit einem weiteren Flachstab oder einer Buchse, zu erzielen.

Diese bekannten bzw. handelsüblichen Bauelemente weisen den für einen auf einem bestimmten Raster- oder Baumodul beruhenden Spielzeugbausatz grundsätzlichen Nachteil auf, dass die gezahnten Ränder der betreffenden Bauelemente bezüglich der Dicken- und Längsabmessungen der Bauelemente nicht beliebig ausgebildet werden können. Dies hat zur Folge, dass beim Zusammenbau mehrerer Bauelemente durch gegenseitigen Eingriff ihrer gezahnten Ränder der genannte Rastermodul des Bausatzes in vielen Verbindungsfällen nicht eingehalten werden kann, was den Bau von bestimmten Spielzeugmodellen wesentlich erschwert oder sogar verunmöglicht.

Es ist Aufgabe der vorliegenden Erfindung, ein Bauelement der eingangs genannten Art zu schaffen, welches im Bereich der Bohrung eine Verzahnung hat, die es erlaubt, den Rastermodul bei beliebigem Zusammenbau mit einem andern benachbarten Bauelement immer einzuhalten.

Das erfindungsgemässe Bauelement weist die im Patentanspruch 1 angeführten Merkmale auf.

Das erfindungsgemässe Bauelement weist den Vorteil auf, dass die über die Endflächen der Bohrung vorragenden Teile der Verzahnungen zweier aufeinander gesteckter Bauelemente jeweils in den Teilen der Verzahnungen der Bauelemente aufgenommen sind, welche in die Bauelemente hineinragen bzw. sich in den ringförmigen Ausnehmungen der Bauelemente befinden. Dadurch kommen trotz der Verzahnungen die einander zugekehrten Endflächen der Bohrungen der beiden Bauelemente zu gegenseitigem Aufliegen, so dass der Rastermodul insgesamt erhalten bleibt, das heisst, die Gesamtdicke bzw. die Gesamtlänge der aufeinander liegenden Bauelemente unverändert ein ganzzahliges Vielfaches oder ein ganzzahliger Bruchteil des Rastermoduls ist.

Die Erfindung bezieht sich auch auf einen Bausatz von Bauelementen mit mehreren erfindungsgemässen Bauelementen. Der Bausatz kann zudem weitere Bauelemente enthalten, welche die Merkmale der erfindungsgemässen Bauelemente mit der Ausnahme aufweisen, dass in der ringförmigen Ausnehmung keine Verzahnung ausgebildet ist. Dadurch kann ein mit der verzahnung versehenes Bauelement mit dem weiteren Bauelement zu einer beweglichen Gelenkverbindung zusammengebaut werden, indem der vorragende Teil der Verzahnung des einen Bauelements in der Ausnehmung des andern Bauteils,aufgenommen wird.

Ausführungsbeispiele des Erfindungsgegenstandes werden nachstehend anhand der Zeichnungen erläutert. Es zeigen:

Fig. 1 eine perspektivische Ansicht eines erfindungsgemässen Bauelements, das als Stab ausgebildet ist, wobei die verzahnung in einer Ringnut als Ausnehmung liegt;

Fig. 2 einen Schnitt längs der Linie II-II in Fig. 1;

Fig. 3 eine perspektivische Ansicht eines als Stab ähnlich Fig. 1 ausgebildeten Bauelements mit einer Ringnut ohne Verzahnung als Ausnehmung;

Fig. 4 einen Schnitt längs der Linie IV-IV in Fig. 3;

Fig. 5 eine perspektivische Ansicht des einen Endbereichs eines Stabes ähnlich Fig. 1; jedoch mit einer äusseren, an der Peripherie ausgebildeten radialen Ausnehmung;

Fig. 6 eine perspektivische Ansicht des einen Endbereichs eines Stabes ähnlich Fig. 1, jedoch mit einer inneren, um die Bohrung ausgebildeten ringförmigen Ausnehmung;

Fig. 7 eine perspektivische Ansicht eines aus mehreren stabförmigen Teilen einstückig geformten Bauelements mit Verzahnungen für statische Gebilde wie Fachwerke;

Fig. 8A bis 8D perspektivische Ansichten weiterer, als Buchsen mit zylindrischer Bohrung und mit Verzahnung ausgebildeter Ausführungsformen des erfindungsgemässen Bauelements;

Fig. 9A bis 9C perspektivische Ansichten weiterer erfindungsgemässer, als Buchsen mit Verzahnung ausgebildeter Bauelemente, deren Bohrung einen kreuzförmigen Querschnitt hat; und

Fig. 10 und 11 perspektivische Ansichten zweier mit einem Verbindungsansatz versehener Buchsen mit bzw. ohne Verzahnung.

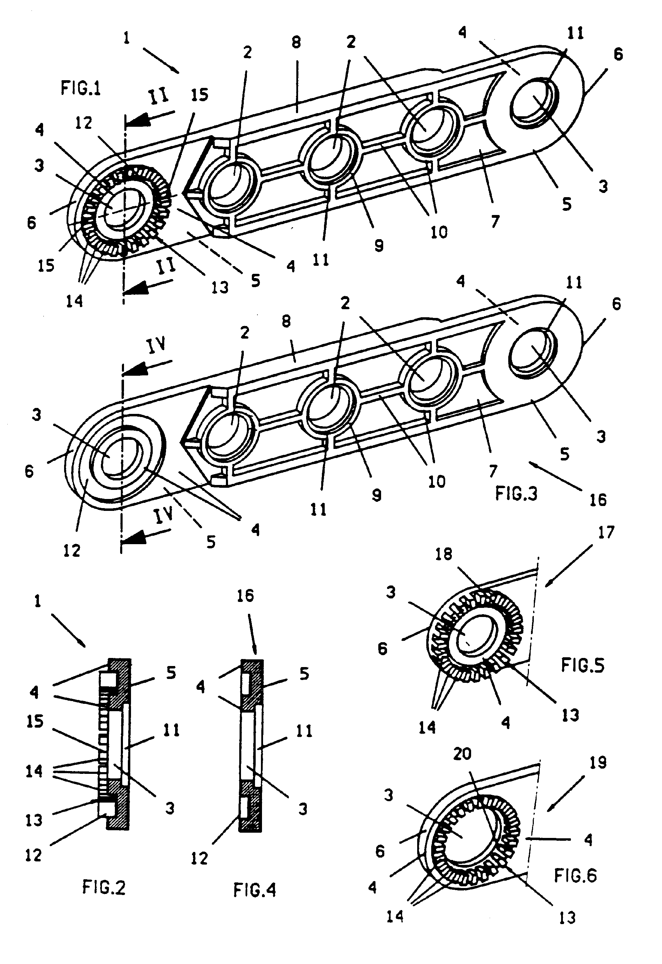

Gemäss Fig. 1 hat ein Stab 1 fünf zylindrische Bohrungen 2 und 3 gleichen Durchmessers, deren Achsen alle in einer Symmetrieebene des Stabes 1 liegen und die voneinander einen konstanten Abstand haben, der vorzugsweise gleich einem Modul M des Bausatzes ist. Die Gesamtlänge des Stabes 1 ist demnach 5 M, und seine Breite ist M. Die Dicke des Stabes 1 im Bereich der drei Zwischenbohrungen 2 ist gleich 1/4 M. Im Bereich der beiden Endbohrungen 3 ist der Stab 1 jeweils auf die halbe Dicke 1/8 M abgesetzt und weist in diesem Bereich eine ebene Fläche 4 auf. Auch auf der Gegenseite weist der Stab 1 im Bereich der Endbohrungen 3 eine ebene Fläche 5 auf. Der Abstand der beiden ebenen Flächen 4 und 5 beträgt also 1/8 M. Die Stabenden haben koaxial zu den Endbohrungen 3 abgerundete Seitenflächen 6. Im Bereich der Zwischenbohrungen 2 besteht der Stab 1 aus einer Trennwand 7 und je einem beidseitig daran angeformten Rand 8, der eine Breite von 1/4 M hat, um die bereits erwähnte Dicke des Stabes 1 von 1/4 M zu bewirken. Jede Zwischenbohrung 2 wird durch eine an die Trennwand 7 angeformte Hülse 9 gebildet, wobei die Hülsen 9 durch Rippen 10 mit den benachbarten Hülsen 9 und dem Rand 8 verbunden sind. Die Zwischenbohrungen 2 haben beidseitig je eine zylindrische Ansenkung 11 zur Aufnahme eines Randwulstes eines Steckelements, das zwei Stäbe 1 miteinander oder einen Stab 1 mit einem andern Bauelement verbinden kann.

Gemäss Fig. 1 und 2 ist koaxial zu den Endbohrungen 3 an der ebenen Fläche 4 eine Ringnut 12 ausgebildet. Die Ringnut 12 weist eine Tiefe auf, die mindestens gleich der halben Dicke des Stabes 1 in seinem um die Endbohrungen 3 abgesetzten Bereich oder allenfalls geringfügig grösser ist, das heisst, mindestens gleich 1/16 M ist. Am Grund der Ringnut 12 ist als radiale Verzahnung ein Zahnkranz 13 mit Zähnen 14 angeformt. Die Zähne 14 haben voneinander einen konstanten Winkelabstand, wobei die Zahnteilung des Zahnkranzes 13 vorzugsweise 15° beträgt; der Zahnkranz 13 weist dann 24 Zähnen auf. Ferner liegen zwei einander diametral gegenüberstehende Zahnflanken 15 in der die Achsen aller Bohrungen 2, 3 enthaltenden Symmetrieebene. Auf der dem Zahnkranz 13 gegenüberliegenden Seite mit der ebenen Fläche 5 hat jede Endbohrung 3 wie die Zwischenbohrungen 2 ebenfalls eine zylindrische Ansenkung 11.

Wie insbesondere aus Fig. 2 ersichtlich ist, ragen die Zähne 14 des Zahnkranzes 13 über die ebene Fläche 4 vor. Die Höhe des vorragenden Teils der Zähne 14 hat im vorliegenden Fall des Stabes 1 einen Wert von 1/16 M. Mit anderen Worten ragt die eine Hälfte des Zahnkranzes 13 über die Fläche 14 vor und die andere Hälfte in den Stab 1 hinein, nämlich in die Ringnut 12.

Der in Fig. 3 und 4 dargestellte Stab 16 unterscheidet sich vom Stab 1 der Fig. 1 und 2 dadurch, dass die Ringnut 12 nicht mit einer Verzahnung versehen, sondern auf der Seite der ebenen Fläche 4 offen ist. Der Zweck des Stabes 16 wird nachstehend erläutert.

Zur Verbindung zweier Stäbe in den wahlweisen Ausführungsformen der Fig. 1, 2 und 3, 4 werden die Stäbe am Ort je einer Endbohrung 3 mit den die Ringnut 12 und den Zahnkranz 13 aufweisenden Seiten, das heisst, mit den ebenen Flächen 4, aufeinander gelegt, worauf durch die fluchtenden Bohrungen 3 ein nicht dargestelltes Steckelement, beispielsweise eine federnde, mit endseitigen Randwülsten versehene Buchse, gesteckt wird. Je nach Kombination der verwendeten Stäbe 1, 16 ergeben sich die folgenden Situationen:

1) Zur Verbindung zweier Stäbe 1 (Fig. 1,2) können diese mit ihren Zahnkränzen 13 ineinandergreifend aufeinander gesteckt und mit dem genannten Steckelement verbunden werden. Hierbei gelangt jeweils der vorragende Teil des Zahnkranzes 13 des einen Stabes 1 zwischen die Zähne 14 des in der Ringnut 12 befindlichen Teils des Zahnkranzes 13 des anderen Stabs 1, so dass die ebenen Flächen 4 der beiden Stäbe 1 aufeinander liegen. Die beiden Stäbe 1 können hierbei entweder fluchten oder einen Winkel miteinander bilden, wobei der Winkel in Schritten von 15° wählbar ist. Der wählbare Winkelbereich zwischen den beiden Stäben 1 ist minimal 60°.

2) Bei der Verbindung eines Stabes 1 (Fig. 1,2) mit einem Stab 16 (Fig. 3,4) wird der vorragende Teil des Zahnkranzes 13 des Stabes 1 vollständig in der Ringnut 12 des Stabes 16 aufgenommen, so dass wiederum die Flächen 4 der beiden Stäbe 1, 16 aufeinander liegen. Es liegt hier eine bewegliche Gelenkverbindung vor.

3) Bei der Verbindung zweier Stäbe 16 (Fig. 3,4) liegen die Flächen 4 der beiden Stäbe 16 aufeinander, wobei ihre Ringnuten 12 keine Funktionen ausüben. Es liegt auch hier eine bewegliche Gelenkverbindung vor.

Bei allen beschriebenen Stabverbindungen liegt der Vorteil vor, dass diese absolut modulgerecht zustande kommen, weil die Stirnflächen der Zahnkränze 13 beim Zusammenbau keine Auflageflächen bilden, sondern ausschliesslich die ebenen Flächen 4. Dies ist auch daraus ersichtlich, dass die beiden miteinander verbundenen Stäbe 1 bzw. 16 in die gleiche Ebene zu liegen kommen.

Das in Fig. 5 in einem Ausschnitt des Bereichs seiner Endbohrung 3 dargestellte Bauelement 17 ist im wesentlichen gleich ausgebildet wie das Bauelement 1 der Fig. 1. Unterschiedlich ist hier, dass statt der Ringnut 12 eine ringförmige Ausnehmung 18 vorhanden ist, welche sich koaxial zur Endbohrung 3 teilweise über den Rand zwischen der ebenen Fläche 4 und der abgerundeten Seitenfläche 6 erstreckt. Auch diese Ausnehmung 18 ist mit einem Zahnkranz 13 versehen.

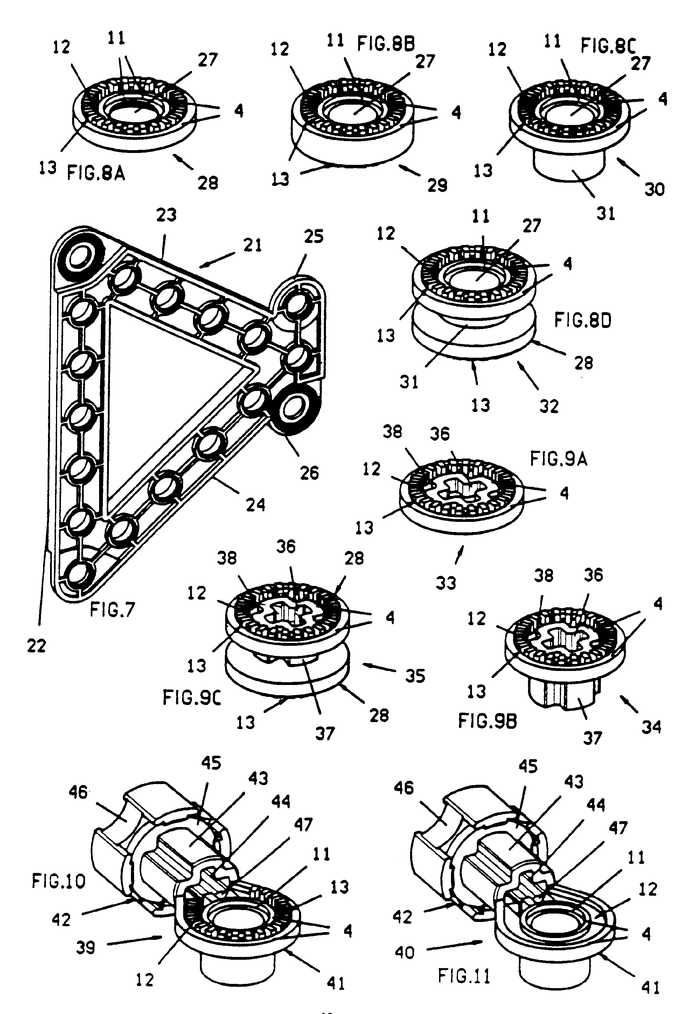

Das in Fig. 6 ausschnittsweise dargestellte Bauelement 19 weist eine ringförmige, mit dem Zahnkranz versehene Ausnehmung 20 auf, welche zwischen der ebenen Fläche 4 und der Endbohrung 3 ausgebildet ist.

In Fig. 7 ist ein weiteres Bauelement 21 perspektivisch dargestellt, das auf der Zusammensetzung mehrerer Stäbe 1 der Fig. 1, 2 beruht. Das in Fig. 7 dargestellte, einstückige Bauelement weist im wesentlichen die Form eines gleichschenkligen Dreiecks mit einer stabförmigen Basis 22 und zwei stabförmigen Schenkeln 23 bzw. 24 auf. Die Basis 22 und die Schenkel 23, 24 sind, abgesehen von ihrer jeweiligen Endbereichen, gleich ausgebildet. Die Endbereiche der Basis 22, welche gleichzeitig die einen Endbereiche der beiden Schenkel 23 und 24 sind, weisen die Ausbildung der die Endbohrungen enthaltenden Endbereiche des Stabes 1 der Fig. 1, 2 auf. Die anderen, zusammenfallenden Endbereiche der Schenkel 23, 24 sind mit angeformten Laschen 25 und 26 versehen, die ihrerseits gleich ausgebildet sind wie die Endbereiche des Stabes 1 der Fig. 1, 2. Es ist ersichtlich, dass das Bauelement 21 bezüglich seiner Endbereiche insbesondere dazu ausgebildet ist, mit weiteren Bauelementen der gleichen Art oder mit Stäben 1 oder 16 gemäss Fig. 1 bzw. 3 zur Erzielung einer ebenen Gitterstruktur, beispielsweise eines Fachwerks, verbunden zu werden.

In den Fig. 8A bis 8D sind weitere Ausführungsformen von erfindungsgemässen Bauelementen perspektivisch dargestellt, die alle scheiben- oder buchsenförmig sind und eine zylindrische Bohrung 27 haben. Alle Bauelemente weisen zudem auf ihrer einen oder beiden Stirnseite die Ringnut 12 und den zum Teil vorragenden und zum Teil in die Ringnut 12 Versenkten Zahnkranz 13 der Fig. 1 auf.

Das Bauelement 28 der Fig. 8A ist scheibenförmig. Seine Dicke ist, ohne Berücksichtigung des vorragenden Teils des Zahnkranzes 13, ein ganzzahliger Bruchteil des Moduls M des Bausatzes, hier beispielsweise 1/8 M. Das Bauelement 29 der Fig. 8B unterscheidet sich vom Bauelement 28 der Fig. 8A einmal durch seine grössere Dicke, die hier 1/4 M ist. Zudem ist das Bauelement 29 auch auf seiner anderen Stirnseite mit einer Ringnut (in Fig. 8B nicht sichtbar) und einem Zahnkranz 13 versehen.

Das Bauelement 30 der Fig. 8C entspricht dem Bauelement der Fig. 8A, ist aber zusätzlich mit einem angeformten, zylindrischen Ansatz 31 versehen, durch welchen die Bohrung 27 ebenfalls führt. Auch dieses buchsenförmige Bauelement 30 weist eine Höhe auf, die ein ganzzahliger Bruchteil des moduls M, gleich dem Modul M oder ein ganzzahliges Vielfaches des Moduls M ist.

Das buchsenförmige Bauelement 32 der Fig. 8D weist in seinen beiden Stirnbereichen je ein scheibenförmiges Bauelement 28 gemäss Fig. 8A auf. Die beiden scheibenförmigen Bauelemente 28 sind durch einen angeformten, zylindrischen Ansatz 31 gemäss Fig. 8C miteinander verbunden. Die Gesamthöhe des Bauelements 32 (ohne Berücksichtigung der vorragenden Teile der Zahnkränze 13) ist ebenfalls in der bereits erwähnten Weise modulgerecht gewählt.

Die in den Fig. 8A bis 8D dargestellten Bauelemente sind ebenfalls mit zylindrischen Ansenkungen 11 zur Aufnahme eines Randwulstes eines Steckelementes versehen.

Die in Fig. 9A, 9B und 9C perspektivisch dargestellten Bauelemente 33, 34 und 35 entsprechen im wesentlichen den Bauelementen 28, 30 und 32 der Fig. 8A, 8C und 8D. Unterschiedlich ist, dass ihre Bohrungen 36 nicht zylindrisch sind, sondern einen kreuzförmigen Querschnitt haben. Aus Gründen der Herstellung ist deshalb der Ansatz 37 (Fig. 9B,9C) nicht zylindrisch, sondern kreuzförmig ausgeführt. Dementsprechend ist auch die radial innere Wand 38 der Ringnut 12 nicht zylindrisch, sondern kreuzförmig ausgebildet.

In den Fig. 10 und 11 sind zwei einander ähnliche Bauelemente der erfindungsgemässen Art perspektivisch dargestellt. Jedes Bauelement 39 bzw. 40 hat ein buchsenförmiges Teil 41, das auf seiner Oberseite mit der Ringnut 12 versehen ist. An das buchsenförmige Teil 41 ist ein Verbindungsansatz 42 für eine Kreuzachse angeformt. Der Verbindungsansatz 42 besteht aus einer Hülse 43, die eine Bohrung 44 mit kreuzförmigem Querschnitt zur Aufnahme der Kreuzachse hat.

An die Hülse 43 ist ein.Flansch 45 angeformt. Ein Klemmteil 46, das auf der Kreuzachse axial verschoben und in einer gewählten Lage auf der Kreuzachse verriegelt werden kann, umgreift den Flansch 45 drehbar.

Beim Bauelement 39 der Fig. 10 ist entsprechend dem Stab 1 der Fig. 1 in der Ringnut 12 ein Zahnkranz 13 angeformt, während das Bauelement 40 der Fig. 11 entsprechend dem Stab 16 der Fig. 3 nur die Ringnut 12 aufweist. Bei beiden Bauelementen 39, 40 ist die Ringnut 12 in dem der Bohrungen 44 der Hülse 43 zugewandten Teilbereich 47 seitlich offen, das heisst, die radial äussere Seitenwand der Ringnut 12 fehlt im Teilbereich 47. Entsprechend erstreckt sich beim Bauelement 39 der Zahnkranz 13 nicht über den Teilbereich 47.

**Patentansprüche**

1.  Bauelement für einen Bausatz, insbesondere für einen Spielzeug-Bausatz, mit mindestens einer Bohrung (3), die an ihren beiden Enden durch ebene, zur Achse der Bohrung (3) senkrechte und die Bohrung (3) umgebende Endflächen (4, 5) begrenzt ist, welche als Auflageflächen für andere, benachbarte Bauelemente dienen und welche einen Abstand voneinander haben, der gleich einem ganzzahligen Vielfachen oder einem ganzzahligen Bruchteil eines Rastermoduls M des Bausatzes ist, wobei an mindestens einer ersten Endfläche (4) der beiden Endflächen (4,5) der Bohrung (3) koaxial zur Bohrung (3) eine radiale, gleichmässige Verzahnung (13) ausgebildet ist, deren Zähne (14) in axialer Richtung der Bohrung (13) zur einen Hälfte über die erste Endfläche (4) vorragen und zur andern Hälfte in einer gegen die erste Endfläche (4) offenen, ringförmigen Ausnehmung (12, 18,20) liegen.

2.  Bauelement nach Anspruch 1, dadurch gekennzeichnet, dass die radiale Verzahnung (13) an den beiden Endflächen (4, 5) ausgebildet ist.

3.  Bauelement nach Anspruch 1 oder 2, dadurch gekennzeichnet, dass sich die radiale Verzahnung (13) nur über einen Teilwinkelbereich der ringförmigen Ausnehmung (12) erstreckt.

4.  Bauelement nach einem der Ansprüche 1 bis 3, dadurch gekennzeichnet, dass die radiale Verzahnung (13) eine Zahnteilung von 15° hat.

5.  Bauelement nach Anspruch 4, dadurch gekennzeichnet, dass eine Zahnflanke (15) der radialen Verzahnung (13) auf eine Vorzugsrichtung des Bauelementes ausgerichtet ist, insbesondere mit einer Symmetrieebene des Bauelementes zusammenfällt.

6.  Bauelement nach einem der Ansprüche 1 bis 5, dadurch gekennzeichnet, dass die ringförmige Ausnehmung eine Ringnut (12) ist, derart, dass sich die erste Endfläche (4) der Bohrung (3) in radialer Richtung beidseitig der Ringnut (12) befindet.

7.  Bauelement nach einem der Ansprüche 1 bis 5, dadurch gekennzeichnet, dass die ringförmige Ausnehmung (18) um eine seitliche Aussenfläche (6) des Bauelementes (17) ausgebildet ist, derart, dass sich die erste Endfläche (4) der Bohrung (3) in radialer Richtung innerhalb der Ausnehmung (18) befindet.

8.  Bauelement nach einem der Ansprüche 1 bis 5, dadurch gekennzeichnet, dass die ringförmige Ausnehmung (20) um die Bohrung (3) ausgebildet ist, derart, dass sich die erste Endfläche (4) der Bohrung (3) in radialer Richtung ausserhalb der Ausnehmung (20) befindet.

9.  Bauelement nach einem der Ansprüche 1 bis 8, dadurch gekennzeichnet, dass die Tiefe der Ausnehmung (12,18, 20) in axialer Richtung der Bohrung (3) mindestens angenähert ein ganzzahliger Bruchteil des Abstandes zwischen den beiden Endflächen (4,5) der Bohrung (3) beträgt.

10. Bausatz von Bauelementen mit mehreren ersten Bauelementen nach einem der Ansprüche 1 bis 9.

11. Bausatz nach Anspruch 10, dadurch gekennzeichnet, dass er weitere Bauelemente (16,40) mit mindestens einer Bohrung (3) enthält, die an ihren beiden Enden durch ebene, zur Achse der Bohrung (3) senkrechte Endflächen (4,5) begrenzt ist, welche als Auflageflächen für andere, benachbarte Bauelemente dienen und welche einen Abstand voneinander haben, der gleich einem ganzzahligen Vielfachen oder einem ganzzahligen Bruchteil eines Rastermoduls M des Bausatzes ist, und an welchen weiteren Bauelementen (16) an mindestens einer ersten Endfläche (4) der beiden Endflächen (4,5) der Bohrung (3) eine gegen die erste Endfläche (4) offene, ringförmige Ausnehmung (12;18;20) ausgebildet ist, zur Aufnahme der über die erste Endfläche (4) der ersten Bauelemente vorragenden Zähne (14).

12. Bausatz nach Anspruch 11, dadurch gekennzeichnet, dass die ringförmige Ausnehmung der weiteren Bauelemente (16, 40) eine Ringnut (12) ist, derart, dass sich die erste Endfläche (4) der Bohrung (3) in radialer Richtung beidseitig der Ringnut (12) befindet.

13. Bausatz nach Anspruch 11, dadurch gekennzeichnet, dass die ringförmige Ausnehmung (18) der weiteren Bauelemente (16,40) um eine seitliche Aussenfläche (6) der Bauelemente ausgebildet ist, derart, dass sich die erste Endfläche (4) der Bohrung (3) in radialer Richtung innerhalb der Ausnehmung (18) befindet.

**14.** Bausatz nach Anspruch 11, dadurch gekennzeichnet, dass die ringförmige Ausnehmung (20) der weiteren Bauelemente (16,40) um die Bohrung (3) ausgebildet ist, derart, dass sich die erste Endfläche (4) der Bohrung (3) in radialer Richtung ausserhalb der Ausnehmung (20) befindet.

**15.** Bausatz nach einem der Ansprüche 12 bis 14, dadurch gekennzeichnet, dass die Tiefe der Ausnehmung (12;18;20) der weiteren Bauelemente (16,40) in axialer Richtung der Bohrung (3) mindestens angenähert ein ganzzahliger Bruchteil des Abstandes zwischen den beiden Endflächen (4,5) der Bohrung (3) beträgt.

## Claims

**1.** Structural component for a building set, especially for a toy building set, comprising at least one bore (3) which is defined at either end by flat end surfaces (4, 5) perpendicular to the axis of the bore (3) and surrounding the bore (3), said flat surfaces serving as bearing surfaces for other adjacent structural components and being at a distance from one another which is equal to an integral multiple or an integral fraction of a modular dimension M of the building set, wherein uniform radial toothing (13) is formed on at least a first end surface (4) of the two end surfaces (4, 5) of the bore (3) coaxial with the bore (3), half of the teeth (14) of which project beyond the first end surface (4) in the axial direction of the bore (13) and the other half of the teeth of which are situated in an annular recess (12, 18, 20) open towards the first end surface (4).

**2.** Structural component according to claim 1, characterised in that the radial toothing (13) is formed on the two end surfaces (4, 5).

**3.** Structural component according to claim 1 or claim 2, characterised in that the radial toothing (13) only extends over a partial angular range of the annular recess (12).

**4.** Structural component according to one of claims 1 to 3, characterised in that the radial toothing (13) has a tooth pitch of 15°.

**5.** Structural component according to claim 4, characterised in that a tooth flank (15) of the radial toothing (13) is aligned with a preferential direction of the structural component, and in particular coincides with the plane of symmetry of the structural component.

**6.** Structural component according to one of claims 1 to 5, characterised in that the annular recess is an annular groove (12), so that the first end surface (4) of the bore (3) is situated on either side of the annular groove (12) in the radial direction.

**7.** Structural component according to one of claims 1 to 5, characterised in that the annular recess (18) is formed around a lateral outer surface (6) of the structural component (17), so that the first end surface (4) of the bore (3) is situated within the recess (18) in the radial direction.

**8.** Structural component according to one of claims 1 to 5, characterised in that the annular recess (20) is formed around the bore (3), so that the first end surface (4) of the bore (3) is situated outside the recess (20) in the radial direction.

**9.** Structural component according to one of claims 1 to 8, characterised in that the depth of the recess (12, 18, 20) in the axial direction of the bore (3) is at least approximately an integral fraction of the distance between the two end surfaces (4, 5) of the bore (3).

**10.** Building set consisting of structural components comprising a plurality of first structural components according to one of claims 1 to 9.

**11.** Building set according to claim 10, characterised in that it includes other structural components (16, 40) comprising at least one bore (3) which is defined at either end by flat end surfaces (4, 5) perpendicular to the axis of the bore (3), said end surfaces serving as bearing surfaces for other adjacent structural components and being at a distance from one another which is equal to an integral multiple or an integral fraction of a modular dimension M of the building set, and in which other structural components (16) an annular recess (12; 18; 20) open towards the first end surface (4) is formed on at least a first end surface (4) of the two end surfaces (4, 5) of the bore (3) for receiving the teeth (14) projecting beyond the first end surface (4) of the first structural components.

12. Building set according to claim 11, characterised in that the annular recess of the other structural components (16, 40) is an annular groove (12), so that the first end surface (4) of the bore (3) is situated on either side of the annular groove (12) in the radial direction.

13. Building set according to claim 11, characterised in that the annular recess (18) of the other structural components (16, 40) is formed around a lateral outer surface (6) of the structural components, so that the first end surface (4) of the bore (3) is situated within the recess (18) in the radial direction.

14. Building set according to claim 11, characterised in that the annular recess (20) of the other structural components (16, 40) is formed around the bore (3), so that the first end surface (4) of the bore (3) is situated outside the recess (20) in the radial direction.

15. Building set according to one of claims 12 to 14, characterised in that the depth of the recess (12; 18; 20) of the other structural components (16, 40) in the axial direction of the bore (3) is at least approximately an integral fraction of the distance between the two end surfaces (4, 5) of the bore (3).


## Revendications

1. Elément de construction, notamment pour un jeu de construction, comprenant au moins un alésage (3) délimité à ses deux extrémités par des faces terminales planes (4, 5) perpendiculaires à l'axe de l'alésage (3), entourant ces alésages (3), ces faces servant de faces d'appui pour d'autres éléments contigus de construction et étant éloignées l'une de l'autre d'une distance qui est égale à un multiple entier ou à une fraction entière d'un pas modulaire M du jeu de construction, une denture radiale régulière (13) étant réalisée sur au moins une première face terminale (4) des deux faces terminales (4, 5) de l'alésage (3), coaxialement à l'alésage (3), les dents (14) de la denture faisant saillie, à moitié, dans le sens axial de l'alésage (3), au-dessus de la première face terminale (4) et se logeant, par l'autre moitié, dans un évidement annulaire (12, 18, 20) ouvert vers la première face terminale (4).

2. Elément de construction selon la revendication 1, caractérisé en ce que la denture radiale (13) est réalisée sur les deux faces terminales (4, 5).

3. Elément de construction selon la revendication 1 ou 2, caractérisé en ce que la denture radiale (13) ne s'étend que sur une plage angulaire partielle de l'évidement annulaire (12).

4. Elément de construction selon l'une des revendications 1 à 3, caractérisé en ce que la denture radiale (13) présente un pas de denture de 15°.

5. Elément de construction selon la revendication 4, caractérisé en ce qu'un flanc (15) de denture de la denture radiale (13) est aligné sur un sens préférentiel de l'élément de construction, et coïncide notamment avec un plan de symétrie de l'élément de construction.

6. Elément de construction selon l'une des revendications 1 à 5, caractérisé en ce que l'évidement annulaire est une rainure annulaire (12), de telle sorte que la première face terminale (4) de l'alésage (3) se situe radialement des deux côtés de la rainure annulaire (12).

7. Elément de construction selon l'une des revendications 1 à 5, caractérisé en ce que l'évidement annulaire (18) est réalisé autour d'une face latérale extérieure (6) de l'élément (17) de construction, de telle façon que la première face terminale (4) de l'alésage (3) se situe radialement à l'intérieur de l'évidement (18).

8. Elément de construction selon l'une des revendications 1 à 5, caractérisé en ce que l'évidement annulaire (20) est réalisé autour de l'alésage (3), de telle sorte que la première face terminale (4) de l'alésage (3) se situe radialement à l'extérieur de l'évidement (20).

9. Elément de construction selon l'une des revendications 1 à 8, caractérisé en ce que la profondeur de l'évidement (12, 18, 20), dans le sens axial de l'alésage (3), représente au moins approximativement une fraction entière de la distance comprise entre les deux faces terminales (4, 5) de l'alésage (3).

**10.** Jeu d'éléments de construction comprenant plusieurs des premiers éléments de construction selon l'une des revendications 1 à 9.

**11.** Jeu de construction selon la revendication 10, caractérisé en ce qu'il comporte d'autres éléments (16, 40) de construction pourvus d'au moins un alésage (3) qui est délimité à ses deux extrémités par des faces terminales planes (4, 5) perpendiculaires à l'axe de l'alésage (3), ces faces servant de faces d'appui pour d'autres éléments contigus de construction et étant éloignées l'une de l'autre d'une distance qui est égale à un multiple entier ou à une fraction entière d'un pas modulaire M du jeu de construction, un évidement annulaire (12; 18; 20) ouvert vers la première face terminale (4) étant réalisé dans au moins une première face terminale (4) des deux faces terminales (4, 5) de l'alésage (3) des dits autres éléments (16) de construction, cet évidement étant destiné à recevoir les dents (14) faisant saillie au-dessus de la première face terminale (4) des premiers éléments de construction.

**12.** Jeu de construction selon la revendication 11, caractérisé en ce que l'évidement annulaire des autres éléments (16, 40) de construction est une rainure annulaire (12), de telle sorte que la première face terminale (4) de l'alésage (3) se situe radialement des deux côtés de la rainure annulaire (12).

**13.** Jeu de construction selon la revendication 11, caractérisé en ce que l'évidement annulaire (18) des autres éléments (16, 40) de construction est réalisé autour d'une face latérale extérieure (6) des éléments de construction, de telle façon que la première face terminale (4) de l'alésage (3) se situe radialement à l'intérieur de l'évidement (18).

**14.** Jeu de construction selon la revendication 11, caractérisé en ce que l'évidement annulaire (20) des autres éléments (16, 40) de construction est réalisé autour de l'alésage (3), de telle façon que la première face terminale (4) de l'alésage (3) se situe radialement à l'extérieur de l'évidement (20) .

**15.** Jeu de construction selon l'une des revendications 12 à 14, caractérisé en ce que la profondeur de l'évidement (12; 18; 20) des autres éléments (16, 40) de construction, dans le sens axial de l'alésage (3), représente au moins approximativement une fraction entière de la distance comprise entre les deux faces terminales (4, 5) de l'alésage (3).

FIG.1

FIG.2

FIG.3

FIG.4

FIG.5

FIG.6

FIG.8A

FIG.8B

FIG.8C

FIG.8D

FIG.7

FIG.9A

FIG.9B

FIG.9C

FIG.10

FIG.11